# EUROPEAN PATENT APPLICATION

(11) **EP 4 715 616 A1**
(43) Date of publication of application: **25.03.2026**
(21) Application number: 24887373.9
(22) Date of filing: 04.06.2024
(51) Int. Cl.: G06F 15/78

(54) **STORAGE CHIPLET, DATA PROCESSING METHOD, AND COMPUTER SYSTEM**

(30) Priority: 08.11.2023 CN 202311481882
(71) Applicant: Hygon Information Technology Co., Ltd., Tianjin 300392 (CN)
(72) Inventor: ZHENG, Quan, Tianjin 300392 (CN)
(74) Representative: EIP
(86) International application number: PCT/CN2024/097171
(87) International publication number: WO 2025/097749

(57) **Abstract**

Embodiments of the present invention provide a storage chiplet, a data processing method, and a computer system. The storage chiplet comprises: a chiplet interconnect interface, computing modules, and storage modules. The chiplet interconnect interface is used for receiving a data processing command sent to the storage chiplet and transmitting the data processing command to the computing modules. Each computing module is used for reading target data from a corresponding storage module on the basis of the data processing command; performing computation on the target data on the basis of the data processing command to obtain a computation result; and on the basis of the data processing command, enabling the computation re suit to be stored in the storage module. Each storage module is used for storing data. According to the embodiments of the present invention, the computing modules are provided in the storage chiplet, so that the data reading, computation and computation result storage are implemented in the storage chiplet, preventing the data reading and storage from being implemented by the chiplet interconnect interface, thus reducing the bandwidth pressure and power consumption of the chiplet interconnect interface of the storage chiplet.

## Description

This application claims the priority of Chinese Patent Application No. 202311481882.3 filed on November 8, 2023, the disclosure of which is incorporated by reference herein in its entirety as part of the present application.

### TECHNICAL FIELD

Embodiments of the present disclosure relate to a storage chiplet, a data processing method, and a computer system.

### BACKGROUND

A chiplet is a unit chip capable of achieving a certain function and containing a chiplet interconnection interface (referred to as an interconnection interface for short). A plurality of chiplets may be interconnected via the interconnection interface to form a chiplet system; and the chiplet system may constitute a chip such as an SOC (System On Chip). The chiplet includes a chiplet interconnection interface inside, and the communication between a chiplet and another chiplet may be realized through the chiplet interconnection interface so as to realize the interconnection between the chiplets.

A storage chiplet serves as a chiplet for storing data, and in the case where the storage chiplet is interconnected with other chiplets, data needs to be transmitted via the chiplet interconnection interface of the storage chiplets. Therefore, the chiplet interconnection interface of the storage chiplets has a greater bandwidth pressure, and how to reduce the bandwidth pressure of the chiplet interconnection interface of the storage chiplets becomes a technical problem which those skilled in the art urgently needs to solve.

### SUMMARY

In view of the foregoing contents, embodiments of the present disclosure provide a storage chiplet, a data processing method, and a computer system to reduce bandwidth pressure and power consumption pressure of a chiplet interconnection interface of the storage chiplet.

Embodiments of the present disclosure provide the following technical solutions.

In a first aspect, an embodiment of the present disclosure provides a storage chiplet, the storage chiplet comprises a chiplet interconnection interface, a calculation module and a storage module, the chiplet interconnection interface is configured for receiving a data processing command sent to the storage chiplet and transmitting the data processing command to the calculation module; the calculation module is configured for reading target data from the storage module based on the data processing command, performing an operation on the target data based on the data processing command to obtain an operation result and storing the operation result to the storage module based on the data processing command; and the storage module is configured for storing data.

In a second aspect, an embodiment of the present disclosure provides a data processing method, applied to the storage chiplet mentioned in the firs aspect, the data processing method comprises: obtaining the data processing command; reading the target data based on the data processing command; performing an operation on the target data based on the data processing command to obtain the operation result; and storing the operation result based on the data processing command.

In a third aspect, an embodiment of the present disclosure provides a computer system, the computer system comprises: a processor, configured for sending a data processing command; the storage chiplet mentioned in the first aspect, configured for receiving the data processing command sent by the processor, executing the data processing command and storing the operation result of the data processing command to the storage chiplet.

An embodiment of the present disclosure provides a storage chiplet, the storage chiplet comprises a chiplet interconnection interface, a calculation module and a storage module, the chiplet interconnection interface is configured for receiving a data processing command sent to the storage chiplet and transmitting the data processing command to the calculation module; the calculation module is configured for reading target data from the storage module based on the data processing command, performing an operation on the target data based on the data processing command to obtain an operation result and storing the operation result to the storage module based on the data processing command; and the storage module is configured for storing data.

It can be seen that the storage chiplet provided by the embodiments of the present disclosure has a calculation module added therein, so that the reading of the target data, the operation of the target data and the storing of the operation result of the target data can be completed by the calculation module inside the storage chiplet, so that the chiplet interconnection interface only executes the receiving process of the data processing command sent by other chips (such as a processor) outside the storage chiplet, without executing the action of storing the operation result into the storage chiplet after the external chip executes the data processing command for performing the data operation; therefore, it can reduce the number of transmitting relevant data required to be performed by the chiplet interconnection interface under one data processing command for performing the data operation (reading the target data required in the processing command of the data operation and storing the operation result of the target data), so that the bandwidth pressure and power consumption pressure of the chiplet interconnection interface can be reduced.

### BRIEF DESCRIPTION OF DRAWINGS

In order to explain the technical solution of the embodiment of the present disclosure more clearly, the drawings needed in the description of the embodiment will be briefly introduced below. Obviously, the drawings in the following description are only the embodiments of the present disclosure. For those skilled in the art, other drawings may be obtained according to the provided drawings without creative work.
Fig. 1 is a schematic structural diagram of an implementation of data interaction between a storage chiplet and a processor;
Fig. 2 is a schematic structural diagram of a storage chiplet according to an embodiment of the present disclosure;
Fig. 3 is another schematic structural diagram of a storage chiplet according to an embodiment of the present disclosure;
Fig. 4 is a schematic structural diagram of a calculation module in the storage chiplet according to an embodiment of the present disclosure;
Fig. 5 is a schematic flow diagram of a data processing method according to an embodiment of the present disclosure;
Fig. 6 is another schematic flow diagram of a data processing method according to an embodiment of the present disclosure; and
Fig. 7 is a schematic structural diagram of a computer system according to an embodiment of the present disclosure.

### DETAILED DESCRIPTION

Embodiments of the present disclosure are clearly and completely described below with reference to the attached drawings. Obviously, the embodiments described are only a portion of the embodiments of the present disclosure and not all embodiments. Based on the embodiments of the present disclosure, all other embodiments obtained by those skilled in the art without creative labor belong the protection scope of the present disclosure.

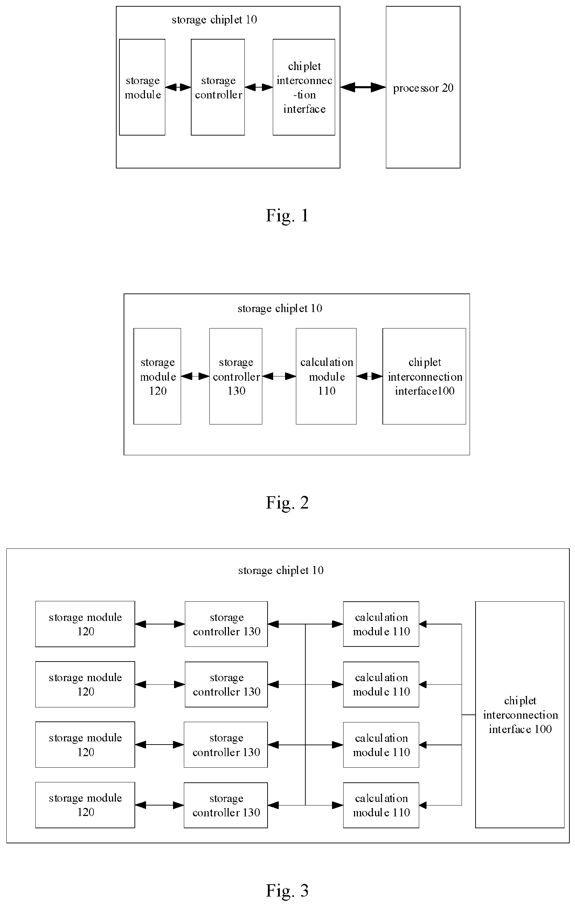

In computer systems, interconnecting exists between storage chiplets and processors (e.g. CPU/GPU). For example, a storage chiplet may be configured for storing data, a processor is configured for data operation processing, and the storage chiplet and the processor may respectively be provided with a chiplet interconnection interface, so that the storage chiplet and the processor may be interconnected via the chiplet interconnection interface, to realize the interaction between the processor and the storage chiplet. For example, when a processor needs to perform a data operation, the processor may interact with a storage chiplet through the chiplet interconnection interface to read an operand from the storage chiplet for performing the data operation and store the result of the operation to the storage chiplet. To facilitate understanding of the data interaction between the storage chiplet and the processor, reference is made to Fig. 1, and Fig. 1 is a schematic structural diagram of an implementation of data interaction between a storage chiplet and a processor.

As shown in Fig. 1, the structure includes a storage chiplet 10 and a processor 20 interconnected via a chiplet interconnection interface to achieve data communication between the processor 20 and the storage chiplet 10. The processor 20 may be a processor chiplet or a processor chip which performs data interaction with the storage chiplet.

The storage chiplet 10 internally includes a chiplet interconnection interface, a storage controller (e.g. a memory controller), a storage module, and a data bus connecting the storage controller and the chiplet interconnection interface for data transmission within the storage chiplet 10.

A storage controller is an important component of a computer system that controls memory internally and enables data to be exchanged between the memory and the processor through the storage controller.

The storage module may store action data required by the computer system to execute the commands.

The processor 20 is configured for performing a data operation and reading an operand in the storage module of the storage chiplet 10 via the chiplet interconnection interface as target data of the data operation when the data operation needs to be performed; after the processor 20 completes a data operation and obtains an operation result, the operation result is written back to the storage module via the chiplet interconnection interface.

As the data operation performance requirement of the computer system continues to increase, the number of data readings and data storings which the chiplet interconnection interface needs to perform is increasing. For example, when the processor 20 needs to read a certain operand to perform corresponding operation processing, the storage chiplet 10 needs to transmit the operand to the processor 20 via the chiplet interconnection interface; the processor 20 receives the operand via the chiplet interconnection interface; after the processor 20 completes the operation processing based on the operand, the processed operation result data needs to be stored in the storage chiplet 10 again. At this time, the processor 20 needs to transmit the operation result back to the storage chiplet 10 via the chiplet interconnection interface, and the storage chiplet 10 receives the operation result via the chiplet interconnection interface.

Therefore, the bandwidth pressure and power consumption pressure of the chiplet interconnection interface of the storage chiplet 10 rapidly increase in the context of the data transmission requirement resulting from the improved performance of data operation.

In order to solve the above-mentioned problems, the embodiments of the present disclosure propose a storage chiplet, wherein a data operation function is implemented inside the storage chiplet, and an operation result may be directly written back to a storage module inside the storage chiplet, so as to reduce the number of interactions between the storage chiplet and a processor, and effectively reduce the bandwidth pressure and power consumption pressure of the chiplet interconnection interface.

With reference to Fig. 2, Fig. 2 is a schematic structural diagram of a storage chiplet according to an embodiment of the present disclosure.

As shown in Fig. 2, the storage chiplet 10 may include: a chiplet interconnection interface 100, a calculation module 110 and a storage module 120;
the chiplet interconnection interface 100 is configured for receiving a data processing command sent to the storage chiplet 10, and transmitting the data processing command to the calculation module 110;
the calculation module 110 is configured for reading target data from the storage module 120 based on the data processing command; performing an operation on the target data based on the data processing command to obtain an operation result; and storing the operation result to the storage module 120 based on the data processing command.

The storage module 120 is configured for storing data.

The chiplet interconnection interface 100 is a module for realizing data communication between the storage chiplet 10 and other external chiplets, and realizing communication transmission of data via a protocol corresponding to the chiplet interconnection interface 100.

The calculation module 110 is a module for performing a data operation, and may perform reading of target data, operation of the target data and storing of an operation result of the target data based on the data processing command sent by the chiplet interconnection interface 100; the overall processing for one data operation can thus be implemented inside the storage chiplet 10.

The calculation module 110 may correspond to a function module for performing data operation in a processor.

The data processing command may enable the calculation module 110 to complete the reading of target data, the operation of the target data and the storing of the operation result, and can complete the complete implementation of the data processing command for performing data operation, namely, acquiring of an operand, operation of the operand and storing of the operation result inside the storage chiplet 10.

It can be seen that the storage chiplet 10 provided by the embodiments of the present disclosure has a calculation module 110 added therein, so that the reading of the target data, the operation of the target data and the storing of the operation result of the target data can be completed by using the calculation module 110 inside the storage chiplet 10, so that the chiplet interconnection interface 100 only executes the receiving process of the data processing command sent by other chips (such as a processor) outside the storage chiplet 10, without executing the action of storing the operation result into the storage chiplet 10 after the external chip executes the data processing command for performing the data operation; therefore, it can reduce the number of transmitting relevant data required to be performed by the chiplet interconnection interface 100 under one data processing command for performing the data operation (reading the target data required in the processing command of the data operation and storing the operation result of the target data), so that the bandwidth pressure and power consumption pressure of the chiplet interconnection interface 100 can be reduced.

In the storage chiplet 10 according to the embodiment of the present disclosure, the received data processing command is a combined command which achieves to perform complete execution of the data processing command for data operation inside the storage chiplet 10. For example, when the data processing command is a data reading command, in order to achieve the read action of the target data, in an implementation manner, it includes reading address field, operation field, and storing address field; the reading address field indicates a reading address of the target data, the operation field indicates an operation type of operation performed on the target data, and the storing address field indicates a storing address of the operation result.

A reading address field, an operation field, and a storing address field are included in the data processing command, which can achieve the reading of the target data, the operation of the read target data, and the storing of the operation result of the target data inside the storage chiplet 10 after the calculation module 110 receives the data processing command.

In order to enable the calculation module 110 to successfully execute the data processing command inside the storage chiplet 10, in an implementation manner, the calculation module 110 is further configured to parse the data processing command, parse the reading address field to obtain the reading address, parse the operation field to obtain the operation type, and parse the storing address field to obtain the storing address.

The implementation process of the data processing command for a processor to perform data operation includes several processes of reading target data from the storage module 120 of the storage chiplet 10 via the chiplet interconnection interface 100, the processor performing operation on the target data read via the chiplet interconnection interface 100, and the chiplet interconnection interface 100 storing an operation result of the target data into the storage module 120 of the storage chiplet 10.

Therefore, in order to reduce the number of data transmitting performed by the chiplet interconnection interface 100 to achieve the purpose of reducing the bandwidth pressure and power consumption pressure of the chiplet interconnection interface 100, the embodiments of the present disclosure combine required command fields corresponding to various involved processes in the implementation process of data operation to obtain a data processing command; a reading address field included in the above-mentioned data processing command corresponds to a reading address required when the chiplet interconnection interface 100 acquires target data from the storage module 120 of the storage chiplet 10, and a command field (a reading address field) required when the chiplet interconnection interface 100 reads the target data is added to the data processing command received by the calculation module 110 in the embodiment of the present disclosure, so that the calculation module 110 can perform a reading action when arranged inside the storage chiplet 10.

After the reading address field is added to the data processing command, in order to enable the calculation module 110 to use the reading address field to read the target data, the calculation module 110 is further used to parse the reading address field so as to obtain a reading address which may be identified by the calculation module 110, thus obtaining the target data.

With reference to Fig. 2 and Fig. 3, Fig. 3 is another schematic structural diagram of a storage chiplet according to an embodiment of the present disclosure;

As shown, the storage chiplet 10 further includes a storage controller 130 interposed between the calculation module 110 and the storage module 120.

The storage controller 130 is configured for controlling the reading the target data from the storage module 120 and the storing the operation result of the target data into the storage module 120. The storage controller 130 is in communication with the storage module 120 of the storage chiplet 10, and is configured for accessing the storage module 120, obtaining target data from the storage module 120 or writing an operation result into the storage module 120 to realize the storing of the operation result. The storage controller 130 manages memory addresses correspondly communicated the storage module 120.

After parsing the data processing command, the calculation module 110 may obtain a command with an address which may be identified and executed by the calculation module 110, for example, a reading command with a reading address and a write-back command with a storing address; thus, the calculation module 110 can determine the storage controller 130 for communicating the storage module 120 corresponding to the address (including the reading address and the storing address) according to the reading address or according to the storing address, and further can access the data inside the storage module 120 through the storage controller 130.

In order to satisfy the operating characteristics of the storage chiplet 10 and the calculation module 110 itself, in one implementation manner, the calculation module 110 being configured for reading target data from the storage module based on the data processing command comprises:
generating a data reading command based on the reading address, the data reading command being configured for indicating to read target data from the reading address of the storage module 120; and
transmitting the data reading command to the storage controller 130 so that the storage controller 130 reads target data from the reading address; and acquiring the target data transmitted by the storage controller 130.

When a processor executes a data processing command for performing a data operation, a reading command is sent to the chiplet interconnection interface 100, so that the chiplet interconnection interface 100 reads target data in the storage module 120 of the storage chiplet 10 according to the received reading command; in the present disclosure, in order to complete the complete implementation of a data processing command for performing a data operation inside the storage chiplet 10, the calculation module 110 is added to the inside of the storage chiplet 10. Therefore, in order to enable the calculation module 110 to smoothly perform an action of reading data, a data reading command with a reading address is further generated according to a command execution mode of the calculation module 110 performing data reading, which complies with the working characteristics of the calculation module 110, and at the same time, target data can be read inside the storage chiplet 10 based on the reading command.

In order to be able to read target data of different reading addresses inside the storage chiplet 10, in an implementation manner, a plurality of the storage controllers 130 are provided, a plurality of the storage modules 120 are provided, and one storage controller 130 controls one storage module 120 correspondingly; and
the calculation module 110 being configured for transmitting the data reading command to the storage controller 130 comprises:
determining the storage module 120 where the reading address is located according to the reading address; and
transmitting the data reading command to the storage controller 130 corresponding to the storage module 120 where the reading address is located.

As shown in Fig. 3, one storage controller 130 correspondingly controls one storage module 120, so that when the calculation module 110 parses to obtain different reading addresses, the storage module 120 where the reading address is located may be determined according to the reading address, and then the data reading command is transmitted to the storage controller 130 corresponding to the storage module 120 where the reading address is located.

In order to enable the operation action on target data, in one implementation manner, the calculation module 110 being configured for performing an operation on the target data based on the data processing command to obtain an operation result comprises:
performing an operation on the target data based on the operation type to obtain the operation result.

The implementation process of the data processing command for a processor to perform data operation includes the action process of the processor performing operation on the target data read by the chiplet interconnection interface 100. Therefore, in order to enable the calculation module 110 to perform data operation based on obtaining of the data processing command, the above-mentioned data processing command includes a operation field, corresponding to a required operation type when the processor performs operation on the target data read by the chiplet interconnection interface 100; in the embodiments of the present disclosure, a command field (the operation field) required when an operation is performed on target data read by the chiplet interconnection interface 100 is added to the data processing command received by the calculation module 110, so that the calculation module 110 can perform an operation action on the data when arranged inside the storage chiplet 10.

After adding an operation field to the data processing command, in order to enable the calculation module 110 to perform an operation on the read target data using the operation field, the calculation module 110 is further used to parse the operation field so as to obtain an operation type which can be identified by the calculation module 110, and then perform an operation on the obtained target data.

In order to enable a storing action of the operation result of the target data, in one implementation manner, the calculation module 110 being configured for storing the operation result to the storage module 120 based on the data processing command comprises:
generating a data write-back command based on the storing address, the data write-back command being configured for indicating to store the operation result to the storing address of the storage module 120; and
transmitting the data write-back command to the storage controller 130 so that the storage controller 130 stores the operation result to the storing address of the storage module 120.

The implementation process of the data processing command for the processor to perform data operation includes an action process of the chiplet interconnection interface 100 writing back and storing the operation result obtained by the processor through operation to the storage module 120 of the storage chiplet 10. Therefore, in order to enable the calculation module 110 to perform storing of the operation result of the target data based on the obtained data processing command, the above-mentioned data processing command includes a storing address field corresponding to a storing address required when the chiplet interconnection interface 100 writes back and stores the operation result of the processor to the storage module 120 of the storage chiplet 10; in the embodiment of the present disclosure, a command field (storing address field) required when the operation result of the target data is stored by the chiplet interconnection interface 100 is added to the data processing command received by the calculation module 110, so that when the calculation module 110 is arranged inside the storage chiplet 10, a storing action of the operation result of the target data can be performed.

After the storing address field is added to the data processing command, in order to enable the calculation module 110 to store the operation result of the target data using the storing address field, the calculation module 110 is further used to parse the storing address field so as to obtain a storing address which may be identified by the calculation module 110, and then store the operation result of the target data.

Furthermore, when a processor executes the data processing command for performing the data operation, a data write-back command may be sent to the chiplet interconnection interface 100 based on the operation result of the operation performed on target data by the processor, so that the chiplet interconnection interface 100 receives the data write-back command and writes back and stores the operation result to the storage module 120 of the storage chiplet 10; in the present disclosure, in order to complete the complete implementation of the data processing command for performing the data operation inside the storage chiplet 10, the calculation module 110 is added to the inside of the storage chiplet 10; therefore, in order to enable the calculation module 110 to smoothly perform a storing action on the operation result of the target data, a data write-back command with a storing address is further generated according to a command execution mode of the calculation module 110 performing data storing, which complies with the working characteristics of the calculation module 110, and at the same time, the storing of the operation result of the target data inside the storage chiplet 10 can be completed based on the write-back command.

When the data write-back command is executed to store the operation result to the corresponding storing address, the operation result is also stored to the storage module 120 corresponding to the storing address by the storage controller 130.

With continued reference to Fig. 3, a plurality of the storage controllers 130 are provided, a plurality of the storage modules 120 are provided, and one storage controller 130 controls one storage module 120 correspondingly; and
the calculation module 110 being configured for transmitting the data write-back command to the storage controller 130 comprises:
determining the storage module 120 where the storing address is located according to the storing address; and
transmitting the data write-back command to the storage controller 130 corresponding to the storage module 120 where the storing address is located.

In order to be able to satisfy the internal structure and data transmission of the storage chiplet 10, in one implementation manner, the chiplet interconnection interface 100 interconnects with an external chip of the storage chiplet 10 via an interconnection protocol, the calculation module 110 communicates with the chiplet interconnection interface 100 via a bus protocol, the calculation module 110 communicates with the storage controller 130 via a bus protocol, and the storage controller 130 communicates with the storage module 120 via a bus protocol.

The external chip may be a chiplet or another type of chip.

When the calculation module 110 is additionally provided inside the storage chiplet 10, in order to enable the calculation module 110 to normally operate inside the storage chiplet 10, namely, to perform normal data communication with the storage controller 130 and the chiplet interconnection interface 100 so as to successfully execute the data processing command, a data bus with the same bus protocol is used inside the storage chiplet 10 to communicate the calculation module 110 with the chiplet interconnection interface 100, and to communicate the calculation module 110 and the storage controller 130.

In order to enhance the data operation capability inside the storage chiplet 10 and enhance the overall data operation capability of the computer system, in one implementation manner, a plurality of calculation modules 110 may also be provided inside the storage chiplet 10, with continued reference to Fig. 3.

As shown in Fig. 3, a plurality of the storage controllers 130 of the storage chiplet 10 are provided, a plurality of the storage modules 120 of the storage chiplet 10 are provided, and a plurality of the calculation modules 110 are provided; the chiplet interconnection interface 100 is in communication with a plurality of calculation modules 110 via a data bus, and the plurality of calculation modules 110 are in interactive communication with a plurality of storage controllers 130 via the data bus, and one storage controller 130 correspondingly controls one storage module 120.

The plurality of calculation modules 110 are integrated into one storage chiplet 10, wherein each calculation module 110 can complete the processing of a data command and realize the operation of data; when the plurality of calculation modules 110 are added, the overall data operation capability of the storage chiplet 10 can be increased accordingly, thereby improving the overall data operation capability of the computer system.

The chiplet interconnection interface 100 is in communication with each added calculation module 110 via a data bus, and the storage controller 130 is in communication with the storage module 120 controlled thereby, namely, the storage controller 130 is in communication with the storage module 120 in a one-to-one corresponding relationship.

In an implementation manner, the chiplet interconnection interface 100 being configured for transmitting the data processing command to the calculation module 110 includes:
determining the calculation module 110 being in an idle state from the plurality of calculation modules 110; and
transmitting the data processing command to the determined calculation module 110 being in the idle state.

The memory address range of the storage module 120 with which each storage controller 130 is in communication is unique. The storage controller 130 and the calculation module 110 are in interactive communication, so that the corresponding storage controller 130 may be accessed according to the reading address or the storing address parsed by the calculation module 110 to satisfy the execution of the data processing command.

In an implementation manner, the chiplet interconnection interface 100 being configured for determining the calculation module 110 being in an idle state from the plurality of calculation modules 110 includes:
querying states of the plurality of calculation modules 110 according to a set order, and determining a state of a currently queried calculation module 110;
stopping the querying if the state of the currently queried calculation module 110 is the idle state; and
if the state of the currently queried calculation module 110 is a busy state, continuing to query a next calculation module 110 until the state of the queried calculation module 110 is the idle state.

When the plurality of calculation modules 110 are provided in one storage chiplet 10, in order to enable the plurality of calculation modules 110 to execute the data processing command in order, so that the data processing resources of the plurality of calculation modules 110 are rationally used, when one data processing command is received by the chiplet interconnection interface 100, first checking whether a first calculation module 110 is in a busy state, if the first calculation module 110 is in the busy state, checking a next calculation module 110, and if the first calculation module 110 is not in the busy state, the data processing command is sent to the first calculation module 110 so that the first calculation module 110 executes the data processing command. Thus, the work of each calculation module 110 may not be affected, and the execution of data processing command may not also be affected.

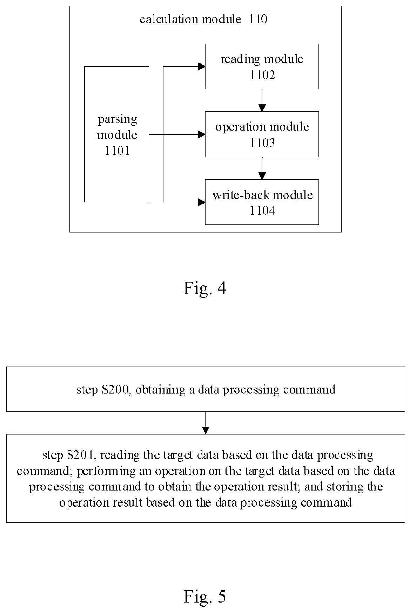

In an implementation manner, reference is made to Fig. 4, which is a schematic structural diagram of the calculation module in the storage chiplet provided by an embodiment of the present disclosure.

As shown in Fig. 4, the calculation module 110 may include:
a parsing module 1101, configured to parse the data processing command sent by the chiplet interconnection interface 10, to obtain a command parsing result, the command parsing result including the storing address, the reading address and the operation type;
a reading module 1102, configured to read the target data using the reading address obtained by parsing using the parsing module 1101;
an operation module 1103, configured to perform an operation on the target data read by the reading module 1102 using the operation type obtained by parsing using the parsing module 1101, to obtain the operation result; and
a write-back module 1104, configured to write back the operation result obtained by the operation module 1103 to the storage module 120 using the storing address obtained by parsing using the parsing module 1101.

Each command field in the data processing command is parsed by the parsing module 1101 to obtain a reading address which can be identified by the reading module 1102, so that the reading module 1102 may read target data in the storage module 120 according to the reading address; then according to the operation type obtained by parsing using the parsing module 1101, the operation module 1103 may perform operation on the target data read by the reading module 1102 according to the operation type; finally, the write-back module 1104 writes back the operation result operated by the operation module 1103 into the storage module 120 according to the storing address obtained by parsing using the parsing module 1101.

The embodiment of the present disclosure also provides a data processing method, with reference to Fig. 5, which is a schematic flow diagram of the data processing method according to an embodiment of the present disclosure. The method is applied to the storage chiplet 10 as described in any of the preceding embodiments.

As shown in Fig. 5, the method includes:
step S200, obtaining a data processing command.

The data processing command is a command capable of realizing a complete process of the data operation, and the complete process of the data operation may include reading of target data, an operation of the read target data, and storing of the operation result of the target data.

In an implementation manner, the data processing command includes: a reading address field, an operation field, and a storing address field; the reading address field indicates a reading address of the target data, the operation field indicates an operation type of the operation performed on the target data, and the storing address field indicates a storing address of the operation result.

By using the data processing command with the reading address field, the operation field, and the storing address field, reading the target data, performing an operation on the target data, and storing the operation result of the target data can be completely performed inside the storage chiplet.

In step S201, reading the target data based on the data processing command; performing an operation on the target data based on the data processing command to obtain the operation result; and storing the operation result based on the data processing command.

It can be seen that, in the data processing method provided by the embodiments of the present disclosure, since a data processing command can realize the complete data operation process, reading the target data, performing an operation on the target data, and storing the operation result of the target data can be completed, so that the chiplet interconnection interface of the storage chiplet only executes the receiving process of the data processing command sent by other chips (such as a processor) outside the storage chiplet, without executing the action of storing the operation result into the storage chiplet after the external chip executes the data processing command for performing the data operation; therefore, it can reduce the number of transmitting relevant data required to be performed by the chiplet interconnection interface under one data processing command for performing the data operation (reading the target data required in the processing command of the data operation and storing the operation result of the target data), so that the bandwidth pressure and power consumption pressure of the chiplet interconnection interface can be reduced.

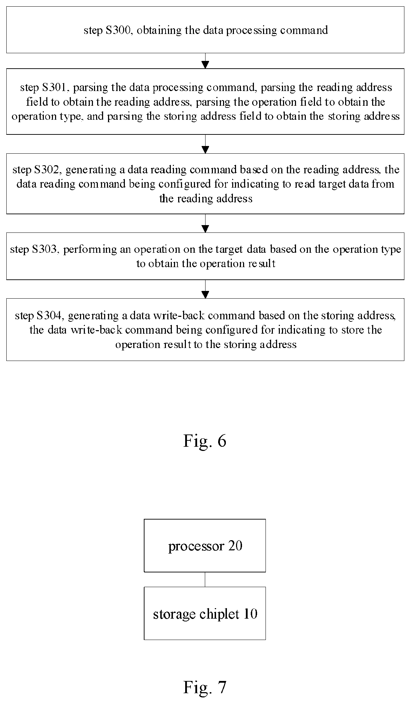

In order to complete an overall implementation of the data operation based on the data processing command, the data processing command may include at least a reading address field in an implementation, and reference is made to Fig. 6, which is another schematic flow diagram of a data processing method according to an embodiment of the present disclosure.

As shown in Fig. 6, the method includes the following steps:
step S300, obtaining the data processing command;
step S301, parsing the data processing command, parsing the reading address field to obtain the reading address, parsing the operation field to obtain the operation type, and parsing the storing address field to obtain the storing address; and
step S302, generating a data reading command based on the reading address, the data reading command being configured for indicating to read target data from the reading address.

The reading address field included in the data processing command corresponds to the reading address required when the chiplet interconnection interface of the storage chiplet acquires target data from the storage module of the storage chiplet; and the command field (the reading address field) required when the target data is read is added to the data processing command in the embodiment of the present disclosure, so that the calculation module in the storage chiplet can execute a reading action according to the parsed reading address.

After reading the target data, the target data is performed the operation using the obtained operation type by parsing.

With further reference to Fig. 6, the method may further include:
step S303, performing an operation on the target data based on the operation type to obtain the operation result.

In the embodiment of the present disclosure, the command field (the operation field) required when operation is performed on target data is added to the data processing command, so that operation action of data can be performed when a calculation module is provided inside the storage chiplet. After adding the operation field to the data processing command, in order to be able to use the operation field to perform operation on the read target data, the calculation module is further used to parse the operation field so as to obtain the operation type which can be identified by the calculation module, and then the obtained target data is performed the operation.

After the operation on the target data is completed, the operation result of the target data is stored using the obtained storage address by parsing.

With further reference to Fig. 6, the method may further include:
step S304, generating a data write-back command based on the storing address, the data write-back command being configured for indicating to store the operation result to the storing address.

The implementation process of the data processing command for the processor to perform data operation includes the action process of the chiplet interconnection interface writing back and storing the operation result obtained by performing the operation using the processor to the storage module of the storage chiplet. Therefore, in order to store the operation result of the target data based on the obtained data processing command, the above-mentioned data processing command includes a storing address field corresponding to a storing address required when the chiplet interconnection interface writes back and store the operation result of the processor to the storage module of the storage chiplet; in the embodiment of the present disclosure, a command field (storing address field) required when the operation result of the target data is stored is added to the data processing command, so that a storing action of the operation result of the target data can be performed. After the storing address field is added to the data processing command, in order to be able to use the storing address field to store the operation result of the target data, the calculation module is further used to parse the storing address field so as to obtain a storing address which can be identified by the calculation module, and then the operation result of the target data is stored.

The embodiments of the present disclosure also provide a computer system, with reference to Fig. 7, and Fig. 7 is a schematic structural diagram of the computer system according to an embodiment of the present disclosure.

As shown in Fig. 7, the computer system may include:
a processor 20, configured for sending a data processing command;
the storage chiplet 10 according to any one of the above-mentioned embodiments for receiving the data processing command sent by the processor and executing the data processing command to store the operation result of the data processing command in the storage chiplet.

It can be seen that in the computer system provided by the embodiments of the present disclosure, the storage chiplet 10 has a calculation module added therein, so that the reading of the target data, the operation of the target data and the storing of the operation result of the target data can be completed by using the calculation module inside the storage chiplet 10, so that the chiplet interconnection interface only executes the receiving process of the data processing command sent by the processor 20 outside the storage chiplet 10, without executing the action of storing the operation result into the storage chiplet 10 after the external processor 20 executes the data processing command for performing the data operation; therefore, it can reduce the number of transmitting relevant data required to be performed by the chiplet interconnection interface under one data processing command for performing the data operation (reading the target data required in the processing command of the data operation and storing the operation result of the target data), so that the bandwidth pressure and power consumption pressure of the chiplet interconnection interface can be reduced.

In one implementation manner, the data processing command sent by the processor 20 includes a reading address field, an operation field, and a storing address field.

The reading address field, the storing address field and the operation field are combined to form the data processing command, so that after the storage chiplet 10 receives the data processing command, the reading of target data, the operation of the target data and the storing of the operation result of the target data can be completed inside the storage chiplet 10, so that it can be avoided that the chiplet interconnection interface of the storage chiplet 10 performs the data transmitting many times with respect to the data processing command of one data operation (the transmission of the target data during the reading of the target data and the transmission of the operation result during the storing of the operation result of the target data), and, thus, the bandwidth pressure and power consumption pressure of the chiplet interconnection interface can be reduced.

Several implementations provided by embodiments of the present disclosure are described above; various alternatives presented by the various implementations may be combined and cross-referenced with one another without conflict, thereby leading to many possible implementations that may be considered as implementations disclosed and published by the embodiments of the present disclosure.

## Claims

1. A storage chiplet, comprising: a chiplet interconnection interface, a calculation module and a storage module, wherein
the chiplet interconnection interface is configured for receiving a data processing command sent to the storage chiplet, and transmitting the data processing command to the calculation module;
the calculation module is configured for reading target data from the storage module based on the data processing command; performing an operation on the target data based on the data processing command to obtain an operation result; and storing the operation result to the storage module based on the data processing command; and
the storage module is configured for storing data.

2. The storage chiplet according to claim 1, wherein the data processing command comprises a reading address field, an operation field, and a storing address field; the reading address field indicates a reading address of the target data, the operation field indicates an operation type of the operation performed on the target data, and the storing address field indicates a storing address of the operation result.

3. The storage chiplet according to claim 2, wherein the calculation module is further configured to parse the data processing command, parse the reading address field to obtain the reading address, parse the operation field to obtain the operation type, and parse the storing address field to obtain the storing address.

4. The storage chiplet according to claim 2 or 3, further comprising a storage controller interposed between the calculation module and the storage module.

5. The storage chiplet according to claim 4, wherein the calculation module being configured for reading target data from the storage module based on the data processing command comprises:
generating a data reading command based on the reading address, the data reading command being configured for indicating to read the target data from the reading address of the storage module;
transmitting the data reading command to the storage controller so that the storage controller reads the target data from the reading address; and
acquiring the target data transmitted by the storage controller.

6. The storage chiplet according to claim 5, wherein a plurality of storage controllers each of which is the storage controller are provided, a plurality of storage modules each of which is the storage module are provided, and one of the plurality of storage controllers controls one of the plurality of storage modules correspondingly; and
the calculation module being configured for transmitting the data reading command to the storage controller comprises:
determining the storage module where the reading address is located according to the reading address; and
transmitting the data reading command to the storage controller corresponding to the storage module where the reading address is located.

7. The storage chiplet according to claim 2 or 3, wherein the calculation module being configured for performing an operation on the target data based on the data processing command to obtain an operation result comprises:
performing an operation on the target data based on the operation type to obtain the operation result.

8. The storage chiplet according to claim 4, wherein the calculation module being configured for storing the operation result to the storage module based on the data processing command comprises:
generating a data write-back command based on the storing address, the data write-back command being configured for indicating to store the operation result to the storing address of the storage module; and
transmitting the data write-back command to the storage controller so that the storage controller stores the operation result to the storing address of the storage module.

9. The storage chiplet according to claim 8, wherein a plurality of storage controllers each of which is the storage controller are provided, a plurality of storage modules each of which is the storage module are provided, and one of the plurality of storage controllers controls one of the plurality of storage modules correspondingly; and
the calculation module being configured for transmitting the data write-back command to the storage controller comprises:
determining the storage module where the storing address is located according to the storing address; and
transmitting the data write-back command to the storage controller corresponding to the storage module where the storing address is located.

10. The storage chiplet according to claim 4, wherein the chiplet interconnection interface interconnects with an external chip of the storage chiplet via an interconnection protocol, the calculation module communicates with the chiplet interconnection interface via a bus protocol, the calculation module communicates with the storage controller via a bus protocol, and the storage controller communicates with the storage module via a bus protocol.

11. The storage chiplet according to claim 10, wherein a plurality of storage controllers of the storage chiplet each of which is the storage controller are provided, a plurality of storage modules of the storage chiplet each of which is the storage module are provided, and a plurality of calculation modules each of which is the calculation module are provided; the chiplet interconnection interface is in communication with the plurality of calculation modules via a data bus, and the plurality of calculation modules are in interactive communication with the plurality of storage controllers via a data bus, and one of the plurality of storage controllers correspondingly controls one the plurality of storage modules.

12. The storage chiplet according to claim 11, wherein the chiplet interconnection interface being configured for transmitting the data processing command to the calculation module comprises:
determining the calculation module being in an idle state from the plurality of calculation modules; and
transmitting the data processing command to the determined calculation module being in the idle state.

13. The storage chiplet according to claim 12, wherein the chiplet interconnection interface being configured for determining the calculation module being in the idle state from the plurality of calculation modules comprises:
querying states of the plurality of calculation modules according to a set order, and determining a state of a currently queried calculation module;
stopping the querying if the state of the currently queried calculation module is the idle state; and
if the state of the currently queried calculation module is a busy state, continuing to query a next calculation module until the state of the queried calculation module is the idle state.

14. The storage chiplet according to claim 13, wherein the calculation module comprises:
a parsing module, configured for parsing the data processing command sent by the chiplet interconnection interface to obtain a command parsing result, the command parsing result comprising the storing address, the reading address and the operation type;
a reading module, configured for reading the target data using the reading address obtained by parsing using the parsing module;
an operation module, configured for performing an operation on the target data read by the reading module using the operation type obtained by parsing using the parsing module to obtain the operation result; and
a write-back module, configured for writing back the operation result obtained by the operation module to the storage module using the storing address obtained by parsing using the parsing module.

15. A data processing method, applied to the storage chiplet according to any one of claims 1-14, comprising
obtaining the data processing command;
reading the target data based on the data processing command;
performing an operation on the target data based on the data processing command to obtain the operation result; and
storing the operation result based on the data processing command.

16. The data processing method according to claim 15, wherein the data processing command comprises a reading address field, an operation field, and a storing address field; the reading address field indicates a reading address of the target data, the operation field indicates an operation type of the operation performed on the target data, and the storing address field indicates a storing address of the operation result.

17. The data processing method according to claim 16, further comprising:
parsing the data processing command, parsing the reading address field to obtain the reading address, parsing the operation field to obtain the operation type, and parsing the storing address field to obtain the storing address.

18. The data processing method according to claim 16 or 17, wherein the reading the target data from the storage module based on the data processing command comprises:
generating a data reading command based on the reading address, the data reading command being configured for indicating to read the target data from the reading address.

19. The data processing method according to any one of claims 16-18, wherein the performing an operation on the target data based on the data processing command to obtain an operation result comprises:
performing an operation on the target data based on the operation type to obtain the operation result.

20. The data processing method according to any one of claims 16-19, wherein the storing the operation result based on the data processing command comprises:
generating a data write-back command based on the storing address, the data write-back command being configured for indicating to store the operation result to the storing address.

21. A computer system, comprising:
a processor, configured for sending a data processing command;
the storage chiplet according to any one of claims 1-14, configured for receiving the data processing command sent by the processor, executing the data processing command and storing the operation result of the data processing command to the storage chiplet.

22. The computer system according to claim 21, wherein the data processing command comprises a reading address field, an operation field, and a storing address field; the reading address field indicates a reading address of the target data, the operation field indicates an operation type of the operation performed on the target data, and the storing address field indicates a storing address of the operation result.
